# EUROPÄISCHE PATENTANMELDUNG

(11) **EP 1 998 490 A1**
(43) Veröffentlichungstag der Anmeldung: **03.12.2008**
(21) Anmeldenummer: 07010548.1
(22) Anmeldetag: 26.05.2007
(51) Int. Cl.: H04L 9/08, B64G 1/00, G01S 1/00

(54) **Kryptographischer Schlüsselgenerator für Weltraum-Anwendungen**

(71) Anmelder: DSI Informationstechnik GmbH, 28199 Bremen (DE)
(72) Erfinder: Hinsenkamp, Laszlo, 28199 Bremen (DE); Michalik, Harald, 38640 Goslar (DE)

(57) **Zusammenfassung**

Der gezeigte kryptographische Schlüsselgenerator ist dadurch gekennzeichnet, dass sowohl die kryptographischen Anforderungen als auch die implementierungstechnischen Anforderungen für den Weltraumeinsatz aufeinander abgestimmt und gleichermaßen erfüllt sind.

## Beschreibung

Es ist bekannt, dass die Sicherheit auf der kryptographischen Qualität der angewendeten Schlüssel basiert, unabhängig von den angewendeten Algorithmen und Verfahren. Korrekte kryptographische Schlüssel dürfen keine innere Struktur aufweisen, die einzelne Bits, die Gruppen von Bits innerhalb des Schlüssels und selbst die unterschiedlichen Schlüssel sollten voneinander weitgehend unabhängig sein.

Die Anforderungen an einen Schlüsselgenerator sind hoch. Die realisierten kryptographischen Verfahren, inklusive der Schlüsselgenerierung, sollten eine besondere Zuverlässigkeit aufweisen. Die Zuverlässigkeit der technischen Implementierung der Kryptomechanismen sollte auf die Sicherheit / kryptographische Zuverlässigkeit des Algorithmus, und nicht auf den allgemeinen technischen Anforderungen zugeschnitten sein. Die mathematischen Algorithmen bieten allgemein eine wesentlich höhere kryptographische Zuverlässigkeit, als eine durchschnittliche technische Realisierung. Deshalb ist es notwendig, die Zuverlässigkeit der Implementierung besonders sorgfältig zu gestalten.

Die Schlüssel (abgesehen von den öffentlichen Schlüsseln) sollten sicher und geheim aufbewahrt werden. Eine der Schutzmechanismen ist die Lebensdauer der Schlüssel. Diese sollte so kurz wie möglich gehalten werden. Deshalb sollten die Schlüssel, insbesondere die kurzlebigen Sitzungsschlüssel möglichst orts- und zeitnah bezogen auf die Anwendung generiert werden.

Es ist auch bekannt, dass an Bord von Raumsonden die angewandte Technik speziellen Umgebungseinflüssen ausgesetzt ist. Einige Weltraumeffekte haben kurzzeitige technische Auswirkungen, andere Weltraumeffekte dagegen verursachen katastrophale langzeitige Fehler. Einige der kurzzeitigen Effekte sind für die Schlüsselgenerierung unproblematisch, andere sowohl kurzzeitige auch langzeitige Effekte dagegen sind problematisch und sollten weitgehend beachtet werden.

## Patentansprüche

1. Kryptographischer Schlüsselgenerator, der **dadurch gekennzeichnet ist, dass** sowohl die kryptographischen Anforderungen als auch die implementierungstechnischen Anforderungen für den Weltraumeinsatz aufeinander abgestimmt und gleichermaßen erfüllt sind.
